# EUROPÄISCHE PATENTSCHRIFT

(11) **EP 3 695 144 B1**
(45) Veröffentlichungstag und Bekanntmachung des Hinweises auf die Patenterteilung: **08.09.2021**
(21) Anmeldenummer: 18782639.1
(22) Anmeldetag: 21.09.2018
(51) Int. Cl.: F16J 15/02, B60J 10/35, F16J 15/06, B60J 10/23

(54) **DICHTUNGSSTRANG, INSBESONDERE ZUR VERARBEITUNG ALS ENDLOSSTRANG**
SEALING STRAND, IN PARTICULAR FOR PROCESSING AS AN ENDLESS STRAND
BANDE D'ÉTANCHÉITÉ, NOTAMMENT POUR LE TRAITEMENT EN BANDE CONTINUE

(30) Priorität: 09.10.2017 DE 102017123419
(43) Veröffentlichungstag der Anmeldung: 19.08.2020
(73) Patentinhaber: CQLT SaarGummi Technologies S.à.r.l., 5544 Remich (LU)
(72) Erfinder: KAST, Christian, 66663 Merzig (DE)
(74) Vertreter: Patentanwälte Bernhardt / Wolff Partnerschaft mbB
(86) Internationale Anmeldenummer: PCT/EP2018/000441
(87) Internationale Veröffentlichungsnummer: WO 2019/072406

(56) Entgegenhaltungen:
- EP-A2- 1 095 808
- WO-A1-99/26801
- DE-A1-102005 036 200
- FR-A1- 2 711 749

## Beschreibung

Die Erfindung betrifft einen Dichtungsstrang, insbesondere zur Verarbeitung unter endloser Zuführung und Abtrennung von Nutzabschnitten, mit mehreren Strangteilen, die an Stoßenden miteinander verbunden sind, sowie einem zweiseitig klebenden Klebeband, dessen dem Dichtungsstrang abgewandte Klebefläche durch einen abziehbaren Schutzstreifen abgedeckt ist, wobei der Schutzstreifen an den Stoßverbindungen jeweils eine die Stoßenden der Schutzstreifenabschnitte der Strangteile überlappende Verbindungslasche aufweist, und wobei eine Verbindung zwischen der Verbindungslasche und den Schutzstreifenabschnitten jeweils erst im Abstand von den Stoßverbindung einsetzt.

Im Zuge einer Verarbeitung als Endlosstrang muss der Schutzstreifen von dem Klebeband abgezogen werden, wobei die Verbindungslaschen dafür sorgen, dass der Abziehvorgang an den Stoßverbindungen nicht unterbrochen wird. Zum Abziehen wird auf den Schutzstreifen schräg zur Stranglängsrichtung eine Abzugskraft ausgeübt, die an den Verbindungsstellen unerwünscht stark ansteigt, was für die Verarbeitung des endlos zugeführten Dichtungsstrangs hinderlich ist.

Um ein solches Ansteigen der erforderlichen Abzugskraft zu vermeiden, wird die Verbindungslasche nicht über ihre gesamte Länge mit den Enden der Schutzstreifen z.B. durch Verkleben oder Verschweißen verbunden. In engerem Abstand um die Stoßverbindungsstelle verbleibt ein verbindungsfreier Abschnitt, der z.B. dadurch erzeugt wird, dass vor der Verbindung mit der Verbindungslasche eine partielle Abdeckung der Schutzstreifen erfolgt. An den Stellen, an welchem im Abstand von der Stoßverbindungsstelle jeweils die Verbindung zwischen der Verbindungslasche und dem Schutzstreifen einsetzt, ist vor der Verbindung mit der Verbindungslasche der Schutzstreifen mit einem Trennschnitt zu versehen. Wenn es im Rahmen der Fertigungstoleranzen nicht gelingt, den Trennschnitt nahe genug an der Stelle, an welcher die Verbindung des Schutzstreifens mit der Lasche einsetzt, zu platzieren, muss ggf. der nicht verbundene Teil des Schutzstreifens bis zur Stoßverbindung mit abgezogen werden. Die dafür erforderliche Kraft ist unerwünscht hoch, insbesondere so hoch, dass der Schutzstreifen einschließlich der Verbindungslasche reißen könnte. FR 2711749 offenbart einen Dichtungsstrang gemäß dem Oberbegriff des Anspruchs 1.

Der Erfindung liegt die Aufgabe zugrunde, einen neuen Dichtungsstrang der obengenannten Art zu schaffen, der ein prozesssicheres Abziehen des Verbindungslaschen aufweisenden Schutzstreifens von dem Dichtungsstrang ermöglicht.

Der diese Aufgabe lösende Dichtungsstrang nach der Erfindung ist dadurch gekennzeichnet, dass die Verbindung der Verbindungslasche mit wenigstens einem der beiden überlappten Stoßenden in einem Bereich in Stranglängsrichtung aufeinanderfolgender Trennschnitte in dem Stoßende des Schutzstreifenabschnitts.

Vorteilhaft wird durch eine Folge dicht aufeinanderfolgender Trennschnitte erreicht, dass in einem weiten Bereich unabhängig von der Position, bei welcher die Verbindung zwischen der Verbindungslasche und dem Schutzstreifenabschnitt einsetzt, der Schutzstreifen ohne hohen Kraftaufwand abziehbar ist, indem maximal ein unverbundener Schutzstreifenabschnitt von der Länge des Abstands zwischen zwei Trennschnitten das Abziehen behindert und mit abzuziehen ist.

Bereiche aufeinanderfolgender Trennschnitte auf beiden Seiten der Stoßverbindung haben den Vorteil, dass in beiden möglichen Abzugsrichtungen unerwünschte Anstiege der erforderlichen Abzugskraft vermieden werden können.

Vorzugsweise sind die Trennschnitte über die gesamte Breite und/oder Dicke des Schutzstreifens durchgehend ausgebildet.

Die aufeinanderfolgenden Trennschnitte können senkrecht oder/und schräg zur Stranglängsrichtung verlaufen.

Insbesondere können die Trennschnitte abweichend von einer Geraden verlaufen und z.B. entgegen der Abzugsrichtung spitz aufeinander zulaufend oder sich im konvexen Bogen erstrecken.

Der Bereich in Stranglängsrichtung aufeinanderfolgender Trennschnitte kann in einer Ausführungsform der Erfindung bis an das betreffende Stoßende des jeweiligen Schutzstreifens heranreichen.

Der Abstand zwischen den Trennschnitten liegt vorzugsweise unter 2 mm, insbesondere unter 1,5 mm.

In einer weiteren bevorzugten Ausführungsform ist die Breite der Trennschnitte < 0,5 mm.

Die Verbindungslasche kann mit dem Schutzstreifen bzw. Schutzstreifenabschnitt verschweißt oder/und verklebt sein.

Die Verschweißung erfolgt zweckmäßig unter Druck und Wärmeeinwirkung.

Die Erfindung ist nachfolgend anhand von Ausführungsbeispielen und der beiliegenden, sich auf diese Ausführungsbeispiele beziehenden Zeichnungen näher erläutert. Es zeigen:
- Fig. 1: einen erfindungsgemäßen Dichtungsstrang in perspektivischer Ansicht,
- Fig. 2: einen Abschnitt des Dichtungsstrangs von Fig. 1 in einer Längsseitensicht,
- Fig. 3: den Dichtungsstrang von Fig. 1 in einem Querschnitt,
- Fig. 4: eine Stoßverbindung des Dichtungsstrangs von Fig. 1 in einer Draufsicht auf ein Klebeband,
- Fig. 5: eine das Abziehen des Schutzstreifens von dem Klebeband des Dichtungsstrangs von Fig. 1 erläuternde Darstellung in perspektivischer Ansicht,
- Fig. 6: eine das Abziehen des Schutzstreifens erläuternde Darstellung in Seitenansicht des Dichtungsstrangs von Fig. 1, und
- Fig. 7: Ausführungsbeispiele für verschiedene, an einem Schutzstreifenabschnitt gebildete Trenn schnittbereiche.

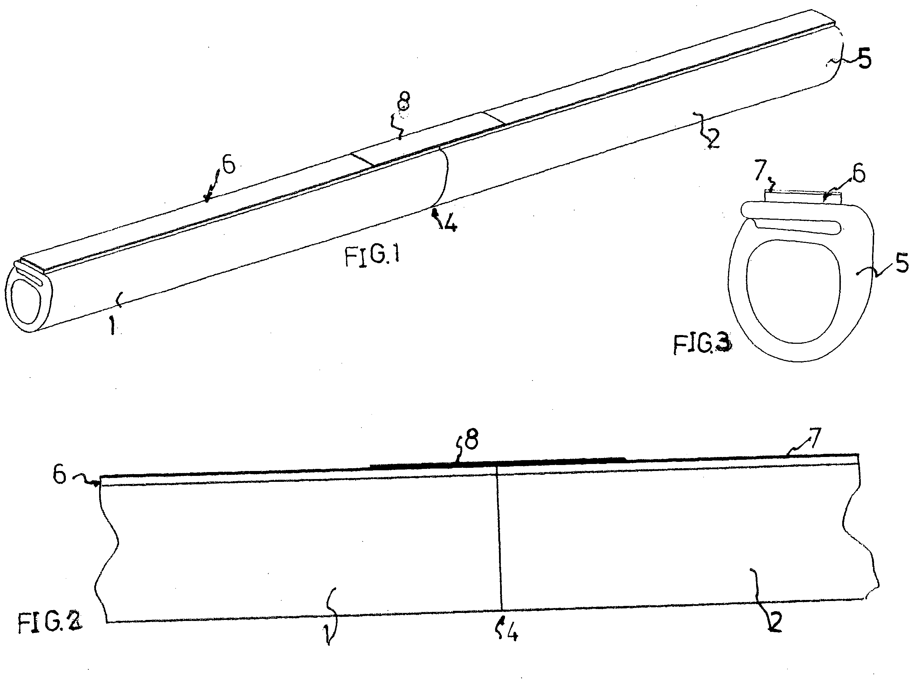

Ein Dichtungsstrang, von dem Fig. 1 einen Ausschnitt zeigt, weist Strangteile auf. In Fig. 1 sind davon die Teile 1 und 2 sichtbar. Die den Dichtungsstrang bildenden Strangteile sind an ihren Stirnenden jeweils unter Bildung von Stoßverbindungen 4 aneinander gefügt.

Der Dichtungsstrang besteht aus einem extrudierten Elastomerkörper 5 und einem mit dem Elastomerkörper 5 verklebten, zweiseitig klebenden Klebeband 6, wobei der extrudierte Elastomerkörper 5 und das Klebeband 6 an den Stoßverbindungen 4 jeweils unterbrochen ist. Die dem Elastomerkörper 5 abgewandte Klebefläche des Klebebandes 6 ist durch einen auf dem Gebiet als Liner bezeichneten Schutzstreifen 7 abgedeckt. An den Stoßverbindungen 4 verbindet die Enden der Linerabschnitte der aneinanderstoßenden Strangteile jeweils eine Verbindungslasche 8.

Der vorangehend beschriebene Dichtungsstrang ist zur Verarbeitung als Endlosstrang hergerichtet, bei welcher der Dichtungsstrang z.B. von einer (nicht gezeigten) Vorratsrolle abgewickelt und einer Applikationseinrichtung zugeführt wird, die von dem Strang laufend Nutzabschnitte abtrennt und daraus unmittelbar Dichtungen, z.B. an Fahrzeugtüren, erzeugt.

Die Stoßverbindungen 4 ergeben sich dadurch, dass bei der Herstellung des Dichtungsstrangs aus dem extrudierten, mit dem Klebeband 6 verbundenen Strang fehlerhafte Abschnitte herausgetrennt werden. Bei der Verarbeitung beim Fahrzeughersteller brauchen dann nur noch Stoßverbindungen 4 enthaltende Abschnitte des Dichtungsstrangs als fehlerhaft ausgesondert zu werden.

Im Zuge der Verarbeitung als Endlosstrang wird der Liner 7 von dem Dichtungsstrang abgezogen, wobei die Verbindungslaschen 8 dafür sorgen, dass der Abziehvorgang an den Stoßverbindungen 4 keine Unterbrechung erfährt.

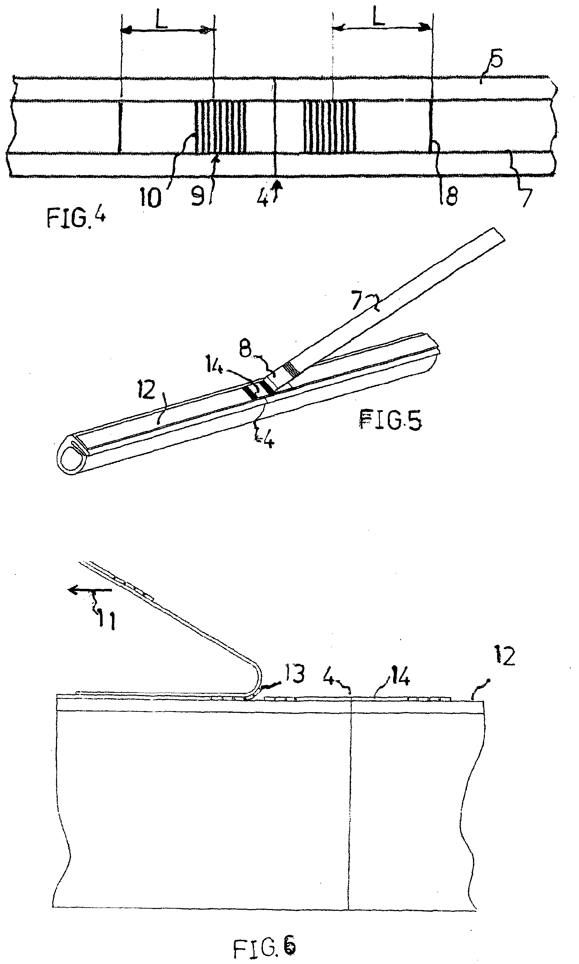

Wie Fig. 4 beispielhaft zeigt, sind die Verbindungslaschen 8 an den Stoßverbindungsstellen 4 nicht über ihre gesamte Länge durchgehend mit den aneinanderstoßenden Linerabschnitten des Liners 7 verbunden, sondern Verbindungsbereiche L setzen in Stranglängsrichtung jeweils erst im Abstand von der Stoßverbindung 4 innerhalb eines Bereichs 9 ein, in welchem der Liner 7 in Stranglängsrichtung aufeinanderfolgende Trennschnitte 10 aufweist. In dem gezeigten Ausführungsbeispiel erstrecken sich die Trennschnitte 10 senkrecht zur Stranglängsrichtung und trennen den Liner 7 jeweils vollständig über die gesamte Dicke und Breite. Der Abstand zwischen den Trennschnitten 10 liegt bei 1,5 mm, die Trennschnittbreite beträgt 0,4 mm. Die Bildung der Trennschnitte 10 erfolgt vorzugsweise mit Hilfe eines Laserschneidgeräts, dass eine exakte, auf die Dicke des Liners abgestimmte Schnittführung ohne Ausübung von Schneiddruck ermöglicht.

Die Verbindung in den Bereichen L kann durch Verschweißen oder/und Verkleben hergestellt sein. Die Verschweißung erfolgt insbesondere unter Einwirkung von Wärme und Druck. Die fehlende Verbindung der Verbindungslasche 8 zu dem Liner 7 in einem Abschnitt 14 zwischen den Verbindungsbereichen L kann z.B. dadurch bewirkt werden, dass vor der Verbindung des Liners 7 mit der Verbindungslasche 8 im Abschnitt 14 eine Abdeckung aufgelegt und die Abdeckung nach der Verbindung durch seitliches Herausschieben wieder entfernt wird. Bei Verklebung der Verbindungslasche 8 mit den Linerenden an der Stoßstelle können auf der Verbindungslasche 8 erzeugte Klebeschichten auf die Bereiche L beschränkt sein. Je nach Genauigkeit der Platzierung der Verbindungslasche 8 in Bezug auf die Stoßstelle 4 oder der Genauigkeit der Platzierung der Verbindungsbereiche L auf der Verbindungslasche 8 kann der Abstand von der Stoßstelle 4, bei welchem die Verbindung zwischen der Verbindungslasche und dem Liner einsetzt, Schwankungen unterliegen.

Bei dem oben genannten, in Fig. 5 und 6 dargestellten Abziehen des Liners 7 von dem Klebeband 6 im Zuge der Verarbeitung des Dichtungsstrangs wird eine Abzugskraft in Liner-Längsrichtung 11 ausgeübt, wobei sich der Liner 7 von der dem Elastomerkörper 5 abgewandten Klebefläche 12 des Klebebandes 6 in Richtung von Pfeil 11 abschält.

Gemäß Fig. 5 und 6 ist beim Abziehen des Liners 7 von der Klebefläche 12 der Trennschnitte 10 aufweisende, an der Stoßverbindung 4 unterbrochene Teil 14 des Liners 7 stehengeblieben, welcher nicht mit der Verbindungslasche 8 verbunden war.

Wie insbesondere Fig. 6 erkennen lässt, hebt sich der Liner 7 von der Klebefläche 12 erst dann wieder ab, wenn bei 13 wieder einer der Verbindungsbereiche L zwischen der Verbindungslasche 8 und dem Liner 7 einsetzt.

In dem letztere Endposition 13 des Bereichs L Schwankungen unterliegen kann, je nachdem, wie genau die oben genannte Abdeckung für den nicht zu verbindenden Linerteil 14 oder wie genau die Verbindungslasche 8 in Bezug auf die Stoßverbindung 4 plaziert wurde, sichert die dichte Folge von Trennschnitten 10 eine Vielzahl von Ablösemöglichkeiten unabhängig von der Position, in welcher der Verbindungsbereich L innerhalb des Bereichs 9 einsetzt. Maximal ist ein unverbundener Abschnitt des Liners 7 zwischen nur zwei Trennschnitten 10 mit abzuziehen. Das Abziehen des Liners 7 kann so mit reduziertem Kraftaufwand prozesssicher ohne die Gefahr des Zerreißens des Liners einschließlich der Verbindunglasche erfolgen, die dann bestehen würde, wenn ein einziger Trennschnitt in Abzugsrichtung vor dem Beginn des Verbindungsbereichs L gebildet wäre. In letzterem Fall müsste der in dem unverbundenen Abschnitt 14 befindliche Liner in entgegengesetzter Richtung mit abgezogen werden, was eine die Festigkeit des Liners übersteigende Abzugskraft erfordern könnte.

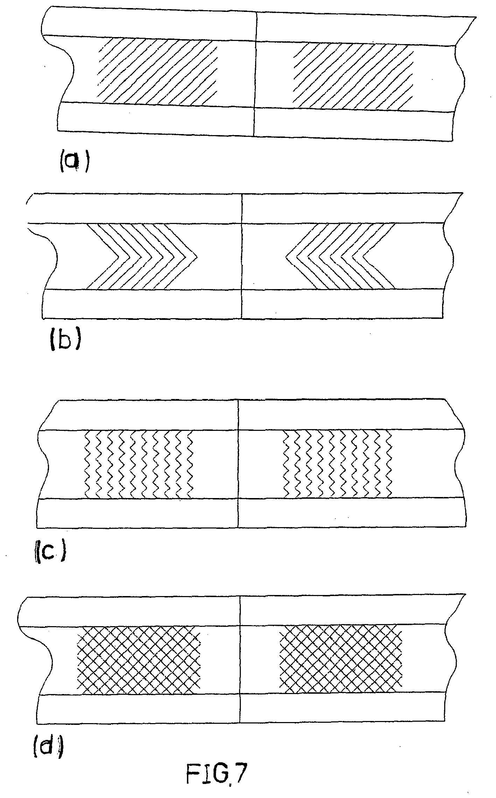

Fig. 7 zeigt weitere Ausführungsbeispiele für die Bildung von Trennschnittbereichen in Stranglängsrichtung dicht aufeinanderfolgender Trennschnitte. In Fig. 7a dargestellte Trennschnittbereiche weisen schräg zur Linerlängsrichtung verlaufende Trennschnitte auf. Fig. 7b zeigt Trennschnitte, die zur Stoßverbindung hin zusammenlaufende Trennschnitte zeigen. Fig.7c zeigt wellenförmige Trennschnitte, die im Mittel senkrecht zur Linerlängsrichtung verlaufen. Gemäß Fig. 7d sind schräg zur Linerlängsrichtung verlaufende Trennschnitte vorgesehen, die sich kreuzen und ein Rautenmuster bilden.

## Patentansprüche

1. Dichtungsstrang, insbesondere zur Verarbeitung unter endloser Zuführung und Abtrennung von Nutzabschnitten, mit mehreren Strangteilen (1,2), die jeweils an Stoßenden miteinander verbunden sind, sowie mit einem zweiseitig klebenden Klebeband (6), dessen dem übrigen Dichtungsstrang abgewandte Klebefläche (12) durch einen abziehbaren Schutzstreifen (7) abgedeckt ist, **dadurch gekennzeichnet, dass**
der Schutzstreifen (7) an den Stoßverbindungen (4) jeweils eine die Stoßenden der Schutzstreifenabschnitte der Strangteile (1,2) überlappende Verbindungslasche (8) aufweist, und wobei eine Verbindung zwischen der Verbindungslasche und den überlappenden Stoßenden der Schutzstreifenabschnitte der Strangteile (1,2) jeweils erst im Abstand von der Stoßverbindung (4) einsetzt, wobei
die Verbindung der Verbindungslasche (8) mit wenigsten einem der beiden überlappten Stoßenden in einem Bereich (9) in Stranglängsrichtung aufeinanderfolgender Trennschnitte (10) in dem Stoßende des Schutzstreifenabschnitts einsetzt.

2. Dichtungsstrang nach Anspruch 1,
**dadurch gekennzeichnet,**
**dass** die aufeinanderfolgenden Trennschnitte (10) senkrecht oder schräg zur Stranglängsrichtung verlaufen.

3. Dichtungsstrang nach Anspruch 1 oder 2,
**dadurch gekennzeichnet,**
**dass** die Trennschnitte (10) über Breite und/oder Dicke des Schutzstreifens (7) durchgehende Trennschnitte (10) sind.

4. Dichtungsstrang nach einem der Ansprüche 1 bis 3,
**dadurch gekennzeichnet,**
**dass** die Trennschnitte (10) abweichend von einer Geraden verlaufen.

5. Dichtungsstrang nach Anspruch 4,
**dadurch gekennzeichnet,**
**dass** die Trennschnitte (10) entgegen der Abzugsrichtung (15) spitz zulaufend oder im konvexen Bogen verlaufen.

6. Dichtungsstrang nach einem der Ansprüche 1 bis 5,
**dadurch gekennzeichnet,**
**dass** der Bereich (9) in Stranglängsrichtung aufeinanderfolgender Trennschnitte (10) bis an die Stoßverbindungsstelle (4) heranreicht.

7. Dichtungsstrang nach einem der Ansprüche 1 bis 6,
**dadurch gekennzeichnet,**
**dass** der Abstand zwischen den Trennschnitten (10) < 2 mm ist.

8. Dichtungsstrang nach einem der Ansprüche 1 bis 7,
**dadurch gekennzeichnet,**
**dass** die Breite der Trennschnitte (10) < 0,5 mm ist.

9. Dichtungsstrang nach einem der Ansprüche 1 bis 8,
**dadurch gekennzeichnet,**
**dass** die Verbindungslasche (8) mit den Schutzstreifen (7) bzw. Schutzstreifenabschnitten verschweißt oder/und verklebt ist.

10. Dichtungsstrang nach Anspruch 9,
**dadurch gekennzeichnet,**
**dass** die Verbindungslasche (8) mit den Schutzstreifen (7) bzw. Schutzstreifenabschnitten durch Druck und Wärmeeinwirkung verschweißt ist.

## Claims

1. Sealing strand, in particular for processing with continuous infeed and separation of useful portions, having a plurality of strand parts (1, 2), which are in each case connected to one another at abutting ends, and having a double-sided adhesive tape (6), that adhesive surface (12) of said tape which faces away from the remaining sealing strand being covered by a removable protective strip (7), **characterized in that** the protective strip (7), at the butt joints (4), has a respective connecting tab (8) which overlaps the abutting ends of the protective strip portions of the strand parts (1, 2), and wherein a connection between the connecting tab and the overlapping abutting ends of the protective strip portions of the strand parts (1, 2) in each case starts only at a distance from the butt joint (4), wherein
the connection of the connecting tab (8) to at least one of the two overlapped abutting ends starts in a region (9) of separating cuts (10), which follow one after another in the strand longitudinal direction, in the abutting end of the protective strip portion.

2. Sealing strand according to Claim 1,
**characterized in that**
the successive separating cuts (10) extend in a perpendicular or inclined manner with respect to the strand longitudinal direction.

3. Sealing strand according to Claim 1 or 2, **characterized in that**
the separating cuts (10) are separating cuts (10) which are continuous over the width and/or thickness of the protective strip (7).

4. Sealing strand according to one of Claims 1 to 3, **characterized in that**
the separating cuts (10) extend in a manner that is different than a straight line.

5. Sealing strand according to Claim 4, **characterized in that**
the separating cuts (10) extend in a pointed manner or in a convex arc, counter to the removal direction (15) .

6. Sealing strand according to one of Claims 1 to 5, **characterized in that**
the region (9) of separating cuts (10), which follow one after another in the strand longitudinal direction, reaches as far as the butt joint (4).

7. Sealing strand according to one of Claims 1 to 6, **characterized in that**
the distance between the separating cuts (10) is < 2 mm.

8. Sealing strand according to one of Claims 1 to 7, **characterized in that**
the width of the separating cuts (10) is < 0.5 mm.

9. Sealing strand according to one of Claims 1 to 8, **characterized in that**
the connecting tab (8) is welded or/and adhesively bonded to the protective strip (7) or protective strip portions.

10. Sealing strand according to Claim 9, **characterized in that**
the connecting tab (8) is welded to the protective strip (7) or protective strip portions under the action of pressure and heat.

## Revendications

1. Boudin d'étanchéité, destiné en particulier à être appliqué avec alimentation sans fin et avec séparation en portions utiles, comportant plusieurs parties de boudin (1, 2) qui sont reliées entre elles respectivement aux extrémités jointives, et comportant une bande adhésive double face (6) dont la surface adhésive (12) détournée du reste du boudin d'étanchéité est recouverte d'un ruban de protection pelable (7),
**caractérisé en ce que**
le ruban de protection (7) présente, au niveau des jointures bout-à-bout (4), une patte de liaison respective (8) qui chevauche les extrémités jointives des portions de ruban de protection des parties de boudin (1, 2), et
une liaison entre la patte de liaison et les extrémités jointives en chevauchement des portions de ruban de protection des parties de boudin (1, 2) ne commence qu'à distance de la jointure bout-à-bout (4),
la liaison de la patte de liaison (8) avec l'une au moins des deux extrémités jointives en chevauchement commence dans une zone (9) de coupes de séparation (10) successives dans la direction longitudinale du boudin, dans l'extrémité jointive de la portion de ruban de protection.

2. Boudin d'étanchéité selon la revendication 1,
**caractérisé en ce que**
les coupes de séparation (10) successives s'étendent perpendiculairement ou en oblique par rapport à la direction longitudinale du boudin.

3. Boudin d'étanchéité selon la revendication 1 ou 2,
**caractérisé en ce que**
les coupes de séparation (10) sont des coupes de séparation continues (10) sur la largeur et/ou sur l'épaisseur du ruban de protection (7).

4. Boudin d'étanchéité selon l'une des revendications 1 à 3,
**caractérisé en ce que**
les coupes de séparation (10) s'étendent en s'écartant d'une droite.

5. Boudin d'étanchéité selon la revendication 4,
**caractérisé en ce que**
les coupes de séparation (10) s'étendent en pointe ou en arc convexe en sens opposé à la direction d'extraction (15).

6. Boudin d'étanchéité selon l'une des revendications 1 à 5,
**caractérisé en ce que**
la zone (9) des coupes de séparation (10) successives dans la direction longitudinale du boudin s'étend jusqu'à l'emplacement de la jointure bout-à-bout (4).

7. Boudin d'étanchéité selon l'une des revendications 1 à 6,
**caractérisé en ce que**
la distance entre les coupes de séparation (10) est < 2 mm.

8. Boudin d'étanchéité selon l'une des revendications 1 à 7,
**caractérisé en ce que**
la largeur des coupes de séparation (10) est < 0,5 mm.

9. Boudin d'étanchéité selon l'une des revendications 1 à 8,
**caractérisé en ce que**
la patte de liaison (8) est soudée et/ou collée aux rubans de protection (7) ou aux portions de ruban de protection.

10. Boudin d'étanchéité selon la revendication 9,
**caractérisé en ce que**
la patte de liaison (8) est soudée par pression et par action de chaleur aux rubans de protection (7) ou aux portions de ruban de protection.
